# EUROPEAN PATENT SPECIFICATION

(11) **EP 0 913 094 B1**
(45) Date of publication and mention of the grant of the patent: **23.02.2000**
(21) Application number: 97115281.4
(22) Date of filing: 03.09.1997
(51) Int. Cl.: A23B 7/148

(54) **Improved control and slowing down system for ripening process of banana fruit**
Verbesserte Regelung und Verlangsamungssystem des Reifungsverfahrens von Bananen
Contrôle amélioré et système de ralentissement du procédé de mûrissement de bananes

(43) Date of publication of application: 06.05.1999
(73) Proprietor: Yong, Cong Fuk, Jakarta (ID)
(72) Inventor: TJOENG, Benny Anto c/o PT. Sakla Randajaya,, Jakarta 14440 (ID)
(74) Representative: VOSSIUS & PARTNER

(56) References cited:
- WO-A-95/00030
- FR-A- 2 690 043

## Description

The present invention relates to a process for improved control of the ripening process and for slowing down the ripening process of banana fruit.

One main problem in connection with the trade of bananas is the necessity to transport them over long distances and for long time periods. This often leads to damage to the skins or flesh of the bananas to be marketed. The damage can be in the form of change in colour of the banana skin or the degradation of the banana taste, so that it brings about losses both to the producers and consumers of bananas. One reason for the damage is that bananas cannot be stored for a long period of time. Rather, the ripening process of the bananas continues during transportation and the ripe bananas are much more susceptible to damage. In order to avoid too much damage to the fruit during transportation, bananas are normally harvested in an unripe state when they have been grown for about 70% of the time normally required to harvest ripe bananas. In this state the bananas are still green. Although less damage occurs during long transportation periods using this method, the disadvantage is that the fruits are not soft after the skin has turned yellow and the fruit do not taste as good as bananas ripened under natural conditions.

Thus, the problem underlying the present invention is to provide a process for the improved control of the banana fruit ripening and for slowing down the ripening, thus avoiding the disadvantages of the known methods.

This problem is solved by the embodiments characterised in the claims.

Thus, the present invention relates to a process for the improved control of banana fruit ripening and/or slowing down the process of fruit ripening comprising the steps of:
(a) harvesting the banana infructescence (bunch of fruits) together with the tree trunk; and
(b) watering of the trunk and the infructescence during transportation and/or storage; and
(c) heating the infructescence and trunk during transportation and/or storage.

It has been found that by the above process, the ripening of the banana fruit can be efficiently controlled. Furthermore, the resulting ripe fruits are more solid and the skin has a finer colour compared to bananas that ripened under natural conditions.

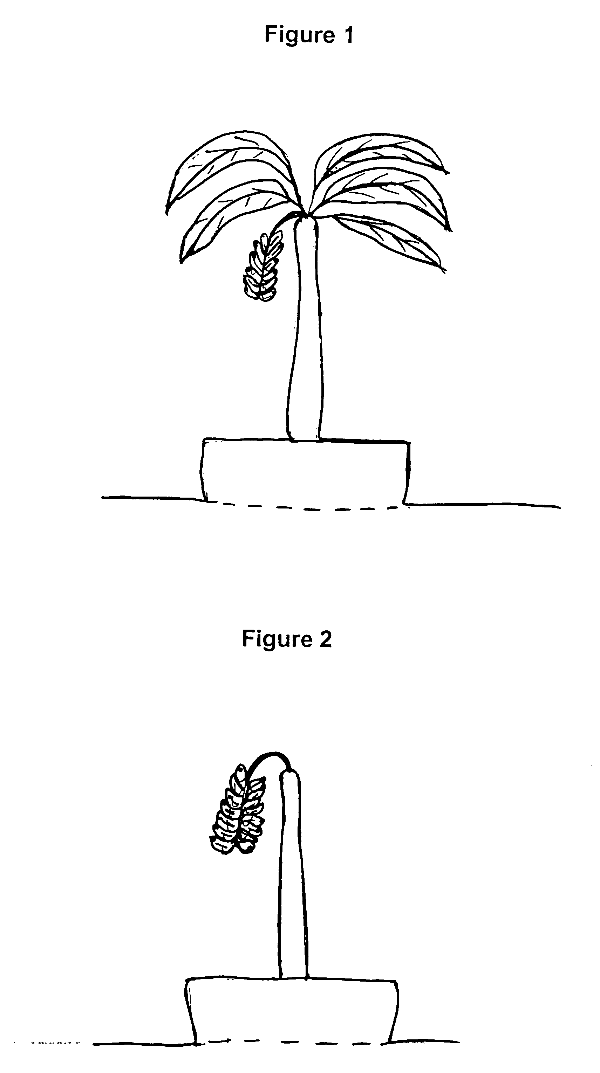

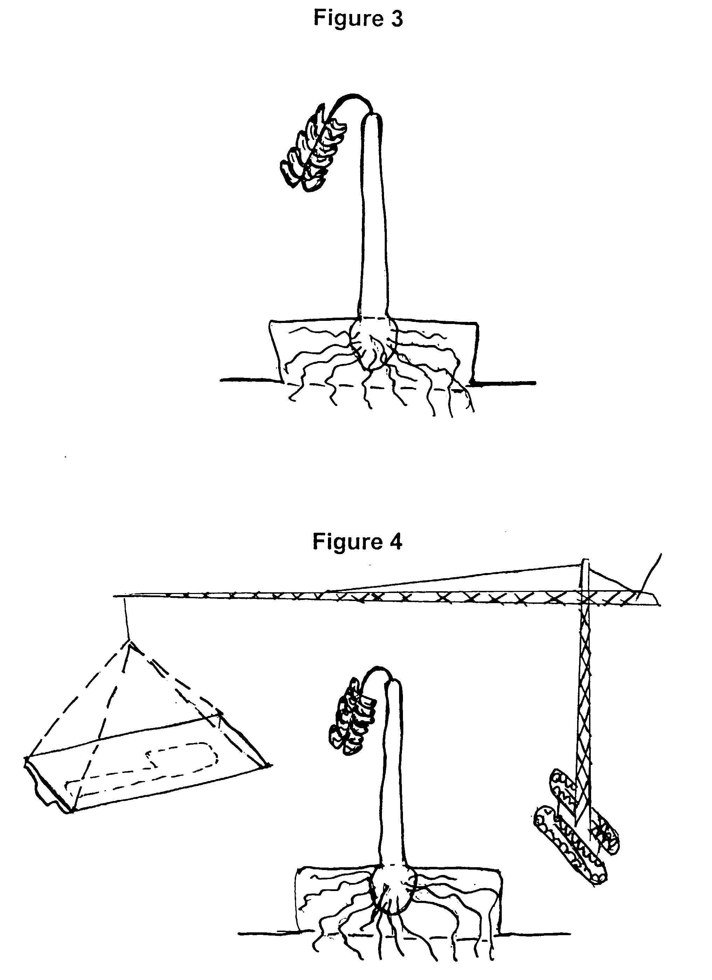

In a preferred embodiment, the tree trunk harvested according to step (a) of the process according to the invention is harvested together with roots and preferably still comprises intact roots. The function of the roots is the uptake of nutrients necessary for the tree's survival.
One possible and preferred way of obtaining banana tree trunks with roots is to cultivate the banana tree in a plastic bag filled with earth which is not completely closed at its lower side. The banana tree having nearly ripe fruits can then easily be removed from the plastic bag with roots intact, for example, by first removing the soil around the roots from the plastic bag and then lifting it with a special device.
The plastic bag used for cultivating the bananas normally has a surface of about 4 square meters, is about 80 cm high and is filled with earth. On the lower side the plastic bag should have holes so that the roots may penetrate into the soil beneath the plastic bag (see Figure 1). Preferably, the plastic bag is not inserted into the ground but is placed on the ground in order to facilitate the easy cutting of the roots penetrating through the lower side of the plastic into the soil beneath it. As can be seen from Figure 4, the tree trunk with roots can be obtained easily by removing the earth from the plastic bag around the base of the banana tree and cutting the roots that penetrate through the lower side of the plastic bag into the soil. A further advantage of the use of a plastic bag for cultivating the banana plant is that less fertilizer is required. The fertilizer can be added directly to the soil in the plastic bag.

In a particularly preferred embodiment the process according to the invention comprises a step in which the formation of radial roots of the harvested banana trunk is promoted. For this purpose the base of the banana trunk may be placed in a mixture of water, coconut milk and a suitable fertilizer. Preferably the trunk is placed on a kind of wooden shelf (see Figure 4) and in a plastic bag containing the above-described solution. The plastic bag is preferably permeable for oxygen. After 5 to 8 days radial roots develop on the roots of the banana tree trunk.

In another preferred embodiment the leaves of the banana tree trunk are removed before the infructescence is harvested together with the tree trunk according to step (a) of the process according to the invention.

The removal of the leaves is preferably done just before the harvest of the bananas. The leaves should be removed from the upper part of the tree downwards. Removing the leaves makes it easier to transport the banana trunk in the following steps and saves space.

The banana tree - the branches of which had been cut off and the roots of which had been disconnected from the soil - can then be lifted from the plastic bag by a suitable device. This should be done carefully so as to avoid any damage, in particular to avoid tearing off of parts of the infructescence. Special care should be taken that no damage occurs where the bunch is very delicate at the curve forming a reverse U shape. Care should be taken at this stage that the xylem of the infructescence and the tree is not damaged. The xylem of the tree trunk supplies the infructescence with liquid and is thus extremely important for preventing the banana fruit from drying and premature ripening. Preferably, the device used for lifting and transporting the banana tree comprises a container having a special mould into which the tree trunk fits. Such a container may be, for example, made of fibre glass.
Normally, the weight of the fruit bunch and the tree trunk is about 120 kg. Thus, the device used for lifting and transportation should be designed for the handling of such weights.

After lifting the infructescence with the tree trunk from the plastic bag, it is preferably placed in a pool in order to be further cleaned of soil. Preferably the washing of the base of the tree trunk and the roots, not including the infructescence (bananas), is carried out by using clean water (drinking water). For this purpose, the base of the tree is submerged for about 30 minutes in order to soften the remaining soil sticking to the base and the roots of the trees. The soil is then removed by using, for example, a brush (a wire brush may be used). Subsequently, the tree trunk and the roots may be further cleaned by spraying it with water under high pressure in order to remove all soil from the trunk and the roots. The bananas may be cleaned by spraying them repeatedly for about 20 minutes with soap water. The soap used can be any commercially available laundry soap.
The tree (not including the bananas) may furthermore be treated in order to remove insects. This may be achieved, for example, by spraying it with warm water.
Furthermore, the tree (not including the infructescence) may be submerged in a solution of red chilli, which has first been crushed and mixed with a solution of crushed garlic. In order to efficiently remove any insects, the tree should be submerged in such a solution for at least about 30 minutes.
Subsequently, the tree and the bananas are washed again for about 20 minutes with clean water.
In order to kill any remaining insects, the tree (including the bananas) can be placed into a pool of fibre glass filled with water and a single phase (N) of high current is applied to the water.

In a preferred embodiment, the banana tree is peeled from the base to the part just before the infructescence after harvest according to step (a) of the process according to the invention. Furthermore, any parts of the roots which are damaged are preferably removed. Most preferably, approximately 6 layers around the trunk, which corresponds to a depth of about 2 cm of the bark, are removed. Accordingly, parts of the roots are removed by preferably cutting up to a depth of around 2 cm from the damaged part. The bark of the trunk is preferably removed since it has generally the characteristic of dry wood in which insects are nesting.
After peeling of the bark and the damaged part of the roots, the clean tree trunk may be further subjected to a radiation with gamma rays towards the base of the tree.

In a further preferred embodiment, the base of the tree is covered with humus, preferably of seaweed material, and wrapped in wet cotton. The humus is used to cover the roots of the banana tree in order to provide them with moisture. It is spread around the roots and optionally sprayed with water. The advantage is that it can also be easily penetrated by air and prevents clogging of the roots. The wet cotton preferably has a water content of between 90 and 95%, more preferably between 91 and 93% and most preferably of about 91.49%. Preferably the wet cotton has an alkaline pH.

In a more preferred embodiment, the trunk wrapped in wet cotton is furthermore wrapped with a thin layer of foam rubber by applying a drying method of up to 105°C and using a pH meter method of 5% solution with a pH value of 6.55.
For this purpose, preferably a think layer of rubber foam of about 100 cm x 100 cm with a thickness of 1 cm is used. The cotton is pressed with a machine to make it soft and light. After this treatment the cotton should have a thickness of about 2 cm and a surface of about 100 cm x 100 cm. It is then placed on the rubber foam.
The roots of the trunks which are long and healthy are then coiled in the same direction so as to avoid damaging them.

Then a piece of hard foam of about 15 cm x 5 cm x 15 cm is placed on the cotton as a supporting pillow to make it easier to keep the humus stay near the lower part.
The tree trunk, which is prepared as described above, is then placed on top of the rubber foam. The humus is spread in a layer of about 15 cm around it. Then the foam is wrapped around the trunk and tied to it.

In a preferred embodiment of the present invention, the watering according to step (b) of the process is performed regularly approximately every 12 hours and lasts for about one hour. Preferably, watering takes place during the day time between 11 a.m. and 12 o'clock.

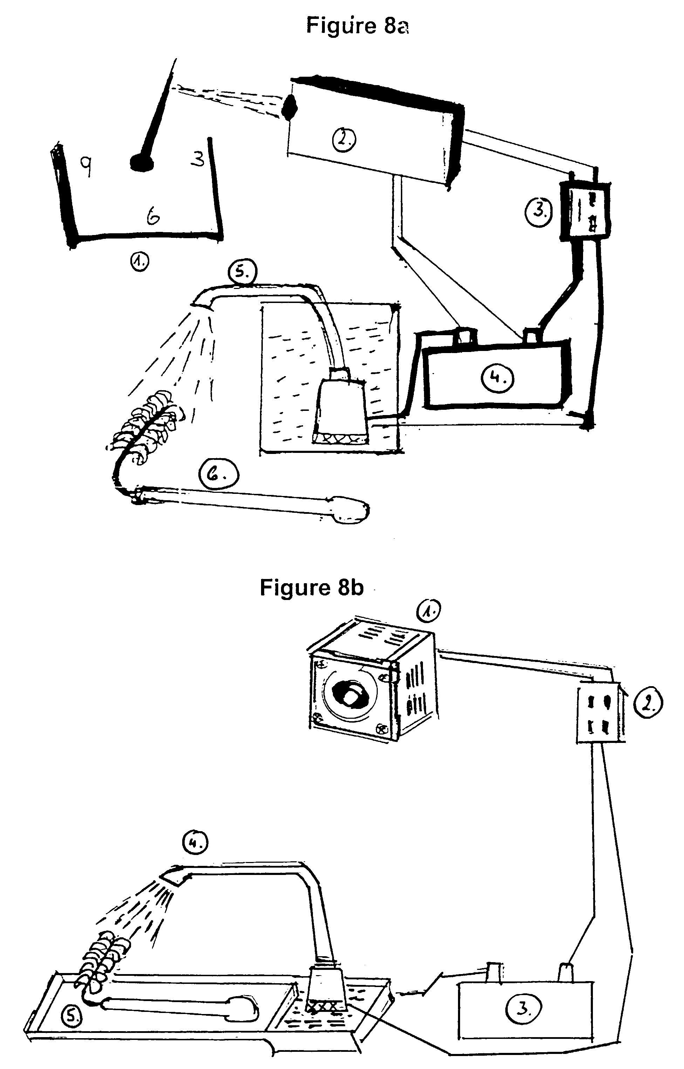

The spraying with water in regular intervals may be controlled, for example, by an automatic device. An example of such a device is shown in Figure 8a.
It comprises: (1) a modified clock; (2) a sensor; (3) a relay; (4) a D.C. battery of 24 volts; (5) a water pump powered by the battery and a tub for drinking water and ice-cubes. Every time the needle of the clock passes the photo electric sensor, the light detects the crossing needle and sends a signal to the relay unit to switch between the on/off status.
Alternatively, an automatic timer may also be used for switching on and off the pump for spraying the water (see Figure 8b).

In a further preferred embodiment, the watering is performed with water having a temperature between 20 and 28 °C. The spraying with water carried out during the daytime is expected to be capable of stimulating a kind of filament liquid to slip under the layer of green fruit skin. The fruit skin which is originally wrinkled, will then smoothen due to the regular spraying. The watering is furthermore done in order to keep the roots of the tree trunk wet, to meet the needs of the fruit stem for water, and to cool down the banana skin.

The heating of the bananas according to step (c) of the process is normally carried out in regular intervals, preferably every 24 hours for about 8 hours. One possibility to achieve a suitable heating of the bananas is the use of halogen lamps, preferably with a capacity of 200 watts.
It appears as if the banana skin as well as the stem are built of structures having the shape of a reverse U and that the change of temperature is required to open the pores to allow a kind of filament fluid contained in the skin and stem to evaporate. By use of heat treatment, it is possible to increase the uptake of water by the banana tree during transport and/or storage. The circulation of fluid in the fruit is stimulated and thus the fruit skin tightens.
The heating temperature of the bananas is preferably in a temperature range of 30 to 36°C. The cooling down of the bananas after heating can be achieved simply by stopping the heating or alternatively by spraying the bananas with water. It is preferred that the heating of the bananas and the spraying with water is carried out simultaneously. Preferably the heating takes place between 9. a.m. and 4 p.m.

In a particularly preferred embodiment of the process according to the invention, the tree trunk bearing the bananas is kept during transportation and/or storage in a special transport and/or storage device, i.e. in a container which is specially designed for this purpose. This container preferably has a solid base but has at least one side wall and/or a top which allows the passing through of air. Most preferably, the side walls and the top are made out of wire mesh.

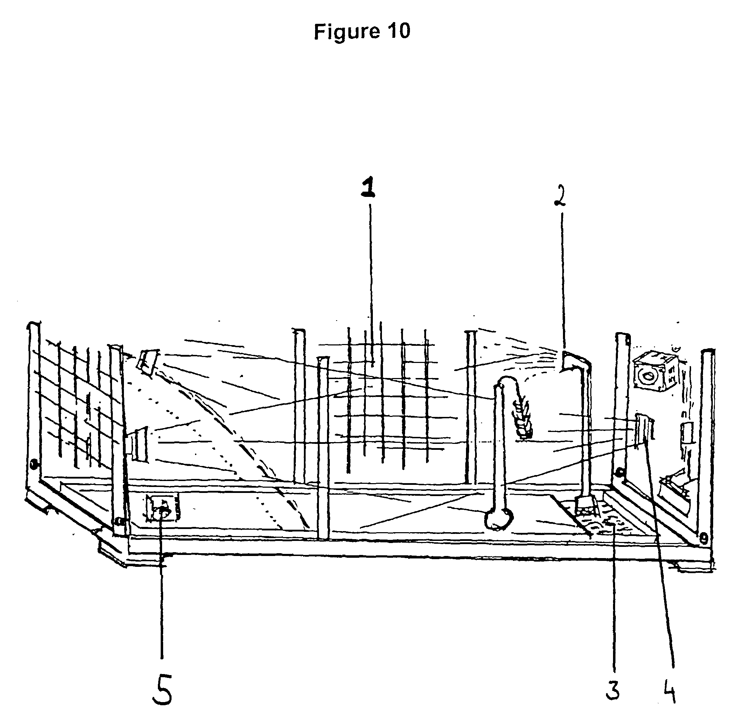

The dimension of such a container is preferably about 40 feet x 2.9m x 2m. In a particularly preferred embodiment, the container is equipped with means for spraying the bananas and the tree trunk with water, for heating the bananas and the tree trunk and/or with means for ventilation, for example, a fan (see Figure 10). The present invention also relates to a container as described above.

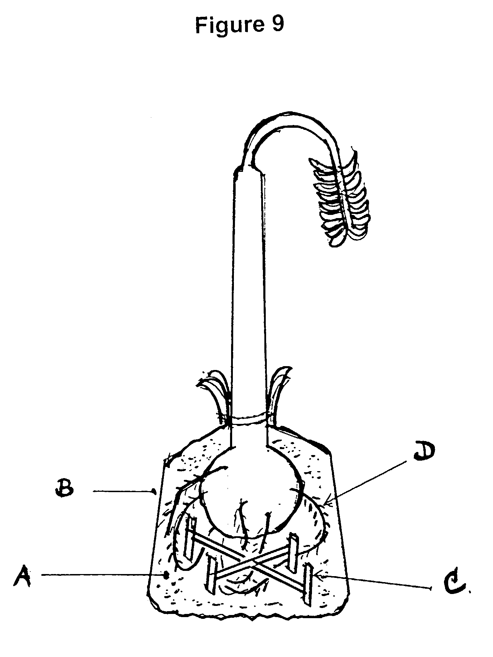

Using the process according to the present invention, it is possible to shorten the time period from the planting to harvest to about 390 days. In contrast thereto, this period normally lasts about 460 days. The process according to the present invention allows efficient control of the ripening of banana fruit and also leads to fruit with a more solid flesh and with a banana skin with better appearance. Furthermore, this process allows for transportation of the harvested bananas over long distances and for long periods of time without severe damage and without using any chemical treatments. Moreover, the process of the present invention allows to transport bananas up to 42 days without a loss of freshness or quality of the bananas.
Figure 1 shows schematically a banana tree cultivated in a large plastic bag, the lower part of which is not completely closed in order to allow roots to grow into the soil beneath the bag.
Figure 2 shows a banana tree with an infructescence (bunch of bananas) whose leaves have been fully cut off.
Figure 3 shows the removal of the soil around the base of the banana tree in the plastic bag.
Figure 4 shows schematically a lifting device for removing the banana tree from the plastic bag.

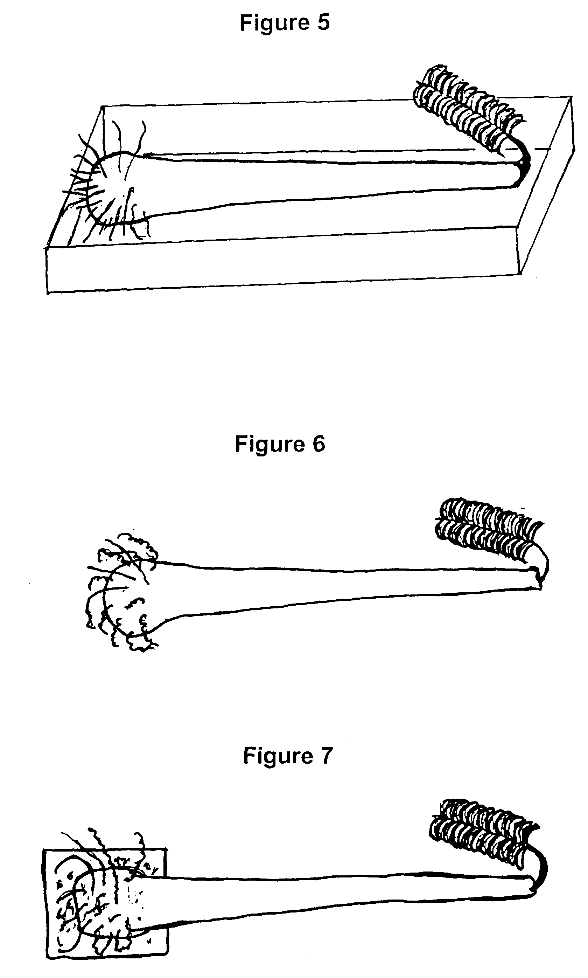

Figure 5 shows the washing carried out in the pool.
Figure 6 shows a banana tree whose outer skin has been peeled off, and some of the intact roots that grow at the base of the banana tree.
Figure 7 shows the wrapping of the banana tree with foam rubber.
Figure 8a and b show schematically devices for automatic spraying of the bananas during transport or storage.
Figure 8a:
   1. The clock that has been adjusted
   2. Optic sensor
   3. Switches
   4. Power Supply Battery
   5. Sprayer
   6. Banana trees ready for watering
Figure 8b:
   1. Solid state timer
   2. Relays
   3. Power supply battery
   4. Sprayer
   5. Banana trees ready for watering
Figure 9 shows schematically the arrangement for promoting growth of radial roots of the harvested banana trunk:
   A : mixture of water, coconut milk and fertilizer
   B : plastic bag permeable for oxygen
   C : wooden shelf
   D : radial roots
Figure 10 shows schematically an example of a device for transporting and/or storing bananas:
   1. Wire with holes
   2. Spraying device
   3. Water container
   4. Halogen lamp
   5. Fan

## Claims

1. A process for the improved control of banana fruit ripening and/or slowing down the process of fruit ripening comprising the steps of:
(a) harvesting the banana infructescence (bunch of fruits) together with the tree trunk;
(b) watering of the trunk and the infructescence during transportation and/or storage; and
(c) heating the infructescence and trunk during transportation and/or storage.

2. The process of claim 1, wherein step (a) is further characterised in that the trunk comprises roots.

3. The process of claim 1 or 2 further comprising a step for promoting growth of radial roots comprising placing the base of the tree trunk in a solution of water, coconut milk and a fertilizer.

4. The process of any one of claims 1 to 3 further comprising the step of removing the leaves from the plant before carrying out step (a) of claim 1.

5. The process of any one of claims 1 to 4 further comprising the step of cleaning the tree trunk and infructescence of soil and insects.

6. The process of claim 5 wherein the removing of insects is achieved by
(a) washing and/or spraying with water;
(b) submerging the tree trunk in a solution of crushed red chilli mixed with a solution of crushed garlic;
(c) placing the tree trunk in a pool filled with water and applying a single phase of high current;
(d) subjecting the tree trunk to gamma-radiation;
wherein any of these measures is applied alone or in combination with at least one of the other measures.

7. The process of any one of claims 1 to 6, further comprising the step of peeling the trunk of the plant and/or cutting damaged roots after carrying out step (a) of claim 1.

8. The process of claim 7, wherein the peeling of the trunk is carried out until about 2 cm in depth of the bark is removed which corresponds to about 6 layers of the bark.

9. The process of any one of claims 1 to 8 further comprising the step of covering the trunk with humus, wrapping it into wet cotton after having carried out step (a) and furthermore wrapping it with a thin layer of foam rubber.

10. The process of any one of claims 1 to 9, wherein step (b) is further characterized in that the watering is performed regularly every 12 hours for a time period of about 1 hour.

11. The process of any one of claims 1 to 10, wherein the watering is performed with water having a temperature of about 20°C to about 28°C.

12. The process of claim 11, wherein the heating of the infructescence is performed regularly every 24 hours for a time period of 8 hours.

13. The process of claim 12, wherein the heating temperature is in the range of 30 °C to 36 °C.

14. The process of any one of claims 1 to 13, wherein the banana tree trunk is kept during transportation and/or storage in a device having a solid base and at least one side wall and/or a top allowing the passing through of air.

15. The process of claim 14, wherein the side wall(s) and/or top of the device are made out of wire mesh.

16. A device as defined in claim 14 or 15 further comprising means for watering the banana tree trunk, means for heating the infructescence and/or means for ventilation.

## Patentansprüche

1. Verfahren zur verbesserten Kontrolle der Reifung der Bananenfrucht und/oder zur Verlangsamung des Prozesses der Fruchtreifung, wobei das Verfahren die Schritte umfaßt:
(a) Ernten des Bananenfruchtkörpers (Fruchtbündel) zusammen mit dem Baumstamm;
(b) Wässern des Stammes und des Fruchtkörpers während des Transports und/oder der Lagerung; und
(c) Wärmen des Fruchtkörpers und Stammes während des Transports und/oder der Lagerung.

2. Verfahren nach Anspruch 1, wobei Schritt (a) weiter dadurch charakterisiert ist, daß der Stamm Wurzeln umfaßt.

3. Verfahren nach Anspruch 1 oder 2, weiter umfassend einen Schritt zur Förderung des Wachstums der Radialwurzeln, das das Setzen der Basis des Baumstamms in eine Lösung aus Wasser, Kokosnußmilch und einem Dünger umfaßt.

4. Verfahren nach einem der Ansprüche 1 bis 3, weiter umfassend den Schritt des Entfernens der Blätter von der Pflanze, bevor Schritt (a) von Anspruch 1 durchgeführt wird.

5. Verfahren nach einem der Ansprüche 1 bis 4, weiter umfassend den Schritt des Säuberns des Baumstamms und des Fruchtkörpers von Erde und Insekten.

6. Verfahren nach Anspruch 5, wobei das Entfernen von Insekten erreicht wird durch
(a) Waschen und/oder Besprühen mit Wasser;
(b) Eintauchen des Baumstamms in eine Lösung von zerkleinerten roten Chilischoten gemischt mit einer Lösung von zerkleinertem Knoblauch;
(c) Überführung des Baumstamms in ein Becken, das mit Wasser gefüllt ist und Setzen einer einzelnen Phase hoher Spannung;
(d) Bestrahlung des Baumstamms mit γ-Strahlen;
wobei jede dieser Maßnahmen alleine oder in Kombination mit zumindest einer der anderen Maßnahmen durchgeführt wird.

7. Verfahren nach einem der Ansprüche 1 bis 6, weiter umfassend den Schritt des Schälens des Stammes der Pflanze und/oder des Abschneidens beschädigter Wurzeln, nachdem Schritt (a) von Anspruch 1 durchgeführt wurde.

8. Verfahren nach Anspruch 7, wobei das Schälen des Stammes durchgeführt wird, bis etwa zwei cm der Tiefe der Rinde entfernt sind, entsprechend etwa sechs Schichten der Rinde.

9. Verfahren nach einem der Ansprüche 1 bis 8, weiter umfassend den Schritt des Bedeckens des Stammes mit Humus, Einwickeln in nasse Baumwolle, nachdem Schritt (a) durchgeführt wurde, und weiterhin Einwickeln mit einer dünnen Schicht aus Schaumgummi.

10. Verfahren nach einem der Ansprüche 1 bis 9, wobei Schritt (b) weiter dadurch charakterisiert ist, daß das Wässern regelmäßig alle zwölf Stunden für einen Zeitraum von etwa einer Stunde durchgeführt wird.

11. Verfahren nach jedem der Ansprüche 1 bis 10, wobei das Wässern mit Wasser, das eine Temperatur zwischen etwa 20°C und etwa 28°C hat, durchgeführt wird.

12. Verfahren nach Anspruch 11, wobei das Wärmen des Fruchtkörpers regelmäßig alle 24 Stunden für einen Zeitraum von acht Stunden durchgeführt wird.

13. Verfahren nach Anspruch 12, wobei die Erwärmungstemperatur im Bereich von 30°C bis 36°C liegt.

14. Verfahren nach einem der Ansprüche 1 bis 13, wobei der Bananenbaumstamm während des Transports und/oder der Lagerung in einer Vorrichtung gehalten wird, die einen festen Boden und zumindest eine luftdurchlässige Seitenwand und/oder ein luftdurchlässiges Oberteil aufweist.

15. Verfahren nach Anspruch 14, wobei die Seitenwand (-wände) und/oder das Oberteil der Vorrichtung aus Maschendraht gefertigt sind.

16. Vorrichtung wie in Anspruch 14 oder 15 definiert, weiter umfassend Mittel zum Bewässern des Bananenbaumstamms, zum Erwärmen des Fruchtkörpers und/oder zur Lüftung.

## Revendications

1. Procédé de contrôle amélioré de mûrissement de bananes et/ou du ralentissement du procédé de mûrissement de fruits, comprenant les étapes de:
(a) récolter de l'infrutescence de bananes (régime de fruits) avec le tronc de l'arbre;
(b) arroser le tronc et l'infrutescence pendant le transport et/ou l'entreposage; et
(c) chauffer l'infrutescence et le tronc pendant le transport et/ou l'entreposage.

2. Procédé selon la revendication 1, selon lequel l'étape (a) est de plus caractérisée par le fait que le tronc comprend les racines.

3. Procédé selon les revendications 1 ou 2, comprenant en plus une étape pour favoriser la croissance de racines radiales comprenant la mise de la base du tronc de l'arbre dans une solution d'eau, de lait du noix de coco et d'engrais.

4. Procédé selon l'une quelconque des revendications 1 à 3, comprenant en plus une étape d'enlèvement des feuilles de la plante avant de réaliser l'étape (a) de la revendication 1.

5. Procédé selon l'une quelconque des revendications 1 à 4, comprenant en plus une étape pour nettoyer le tronc de l'arbre et l'infrutescence de la terre et des insectes.

6. Procédé selon la revendication 5, selon lequel l'enlèvement d'insectes est accompli par:
(a) laver et/ou arroser avec de l'eau;
(b) immerger le tronc de l'arbre dans une solution de piments forts broyés mélangée avec une solution d'ail broyé;
(c) mettre le tronc de l'arbre dans une bassin rempli de l'eau et appliquer une seule phase de haute tension ;
(d) soumettre le tronc de l'arbre à l'irradiation gamma ;
selon lequel chacune de ces mesures est utilisée seule ou en combinaison avec au moins une des autres mesures.

7. Procédé selon l'une quelconque des revendications 1 à 6, comprenant en plus l'étape d'épluchage du tronc de la plante et/ou de la coupe des racines endommagées après avoir réalisé l'étape (a) de la revendication 1.

8. Procédé selon la revendication 7, selon lequel l'épluchage du tronc est réalisé jusqu'à ce que environ 2 cm d'épaisseur de l'écorce soit enlevée ce qui correspond à environ 6 couches de l'écorce.

9. Procédé selon l'une quelconque des revendications 1 à 8, comprenant en plus l'étape de recouvrir du tronc avec de l'humus, l'envelopper dans du coton mouillé après avoir réalisé l'étape (a) et l'envelopper davantage avec une mince couche de caoutchouc mousse.

10. Procédé selon l'une quelconque des revendications 1 à 9, selon lequel l'étape (b) est caractérisée en plus de ce que l'arrosage est accompli régulièrement chaque 12 heures pour une durée d'environ 1 heure.

11. Procédé selon l'une quelconque des revendications 1 à 10, selon lequel l'arrosage est accompli avec de l'eau dont la température est d'environ 20°C à environ 28°C.

12. Procédé selon la revendication 11, selon lequel le chauffage de l'infrutescence est accompli régulièrement chaque 24 heures pour une durée de 8 heures.

13. Procédé selon la revendication 12, selon lequel la température de chauffage est dans l'intervalle de 30°C à 36°C.

14. Procédé selon l'une quelconque des revendications 1 à 13, selon lequel le tronc de bananier est gardé pendant le transport et/ou l'entreposage dans un appareil ayant une base solide et au moins un côté et/ou un dessus permettant le passage d'air.

15. Procédé selon la revendication 14, selon lequel le(s) côté(s) et/ou le dessus de l'appareil sont fabriqués en treillis métalliques.

16. Appareil tel que défini dans la revendication 14 ou 15, comprenant en plus des moyens pour arroser le tronc de bananier, des moyens pour chauffer l'infrutescence et/ou des moyens de ventilation.
